# EUROPEAN PATENT APPLICATION

(11) **EP 4 822 818 A1**
(43) Date of publication of application: **14.10.2026**
(21) Application number: 26169822.9
(22) Date of filing: 31.03.2026
(51) Int. Cl.: H01M 10/54

(54) **ELECTRODE BODY DISASSEMBLY METHOD AND ELECTRODE BODY DISASSEMBLY DEVICE**

(30) Priority: 08.04.2025 JP 2025063646
(71) Applicant: Prime Planet Energy & Solutions, Inc., Chuo-ku, Tokyo 103-0022 (JP); Asaka Riken Co., Ltd., Koriyama-shi, Fukushima 963-0725 (JP)
(72) Inventor: UCHIDA, Yozo, Tokyo,, 103-0022 (JP); YAMADA, Keita, Koriyama-shi,, 963-0725 (JP); HASHIMOTO, Kazuhiko, Koriyama-shi,, 963-0725 (JP); KUROTAKI, Masayuki, Koriyama-shi,, 963-0725 (JP); KITAYAMA, Taku, Koriyama-shi,, 963-0725 (JP)
(74) Representative: Kuhnen & Wacker Patent- und Rechtsanwaltsbüro PartG mbB

(57) **Abstract**

An electrode body disassembly method includes an electrode body preparation step of preparing the wound electrode body in which a strip-shaped negative electrode sheet and a strip-shaped positive electrode sheet are laminated with a strip-shaped first separator sheet and a strip-shaped second separator sheet therebetween and wound in a predetermined winding direction, and a separation step of pulling the first separator sheet and the second separator sheet, and drawing out and separating the first separator sheet, the negative electrode sheet, the second separator sheet and the positive electrode sheet.

## Description

The present invention relates to an electrode body disassembly method and an electrode body disassembly device.

### BACKGROUND

Japanese Patent Application Publication No. 2013-004299 discloses a method of recycling lithium-ion secondary batteries in order to collect usable materials such as nickel from used lithium-ion secondary batteries.

In the method disclosed in this publication, discharged lithium-ion secondary batteries are shredded into small pieces, and the small pieces are immersed in a polar solvent to form a heterogeneous mixture. The heterogeneous mixture is subjected to stirring, sieving, separating and the like, whereby usable electrode materials can be collected.

Incidentally, the present inventors wish to improve the collection rate of the electrode materials.

### SUMMARY

An electrode body disassembly method proposed here includes a step of preparing an electrode body in which a strip-shaped negative electrode and a strip-shaped positive electrode are laminated with a strip-shaped first separator and a strip-shaped second separator therebetween and wound in a predetermined winding direction, and a separation step of pulling the first separator and the second separator and drawing out and separating the first separator, the negative electrode, the second separator and the positive electrode.

According to the electrode body disassembly method, it is possible to improve the collection rate of the electrode materials.

An electrode body disassembly device proposed here is an electrode body disassembly device separating an electrode body in which a strip-shaped positive electrode and a strip-shaped negative electrode are laminated with a strip-shaped first separator and a strip-shaped second separator therebetween and wound in a predetermined winding direction, the device including a first gripping unit that grips a first outer end, which is a winding outer end of the first separator, a first nip roller that nips and draws out the first separator, a first movement device that moves the first gripping unit such that the first separator is introduced into the first nip roller, a second gripping unit that grips a second outer end, which is a winding outer end of the second separator, a second nip roller that nips and draws out the second separator, a second movement device that moves the second gripping unit such that the second separator is introduced into the second nip roller, and a control device. The control device is configured to execute processing of causing the first gripping unit to grip the first outer end, processing of causing the second gripping unit to grip the second outer end, and processing of causing the first movement device to move the first gripping unit so that the first separator is introduced into the first nip roller, and causing the second movement device to move the second gripping unit so that the second separator is introduced into the second nip roller, and the first separator and the second separator are drawn out.

According to the electrode body disassembly device, it is possible to achieve the same operations and effects as those of the electrode body disassembly method.

### BRIEF DESCRIPTION OF THE DRAWINGS

FIG. 1 is a partially cutaway perspective view of an electrode body 1 according to one embodiment;
FIG. 2 is a perspective view of an electrode body disassembly device 10;
FIG. 3 is a perspective view of an electrode body accommodation part 20;
FIG. 4 is a plan view of the electrode body accommodation part 20;
FIG. 5 is a perspective view of the periphery of the electrode body accommodation part 20;
FIG. 6 is a partial cross-sectional view of the periphery of the electrode body accommodation part 20 when an air cylinder 24b is extended;
FIG. 7 is a perspective view of a first separation device 50;
FIG. 8 is a perspective view of the first separation device 50 in a state where a scraper 52 is inserted into a bent portion R1a of a transfer path R1;
FIG. 9 is a perspective view of a second separation device 150;
FIG. 10 is a perspective view of the second separation device 150 in a state where a peeling roller 153 is lowered;
FIG. 11 is a flowchart showing a process of disassembling the electrode body 1;
FIG. 12 is a perspective view of a first transfer unit 40 and the first separation device 50 while transferring a first separator sheet 2; and
FIG. 13 is a front view of a second transfer unit 140 and the second separation device 150 while transferring a second separator sheet 4.

### DETAILED DESCRIPTION

Hereinafter, an electrode body disassembly device according to one embodiment will be described. Here, it should be noted that the embodiments described here are, of course, not intended to particularly limit the present invention. In the following, members and components that perform the same operations will be denoted with the same reference numerals, and redundant descriptions will be appropriately omitted or simplified.

In this specification, the term "electricity storage device" refers to all devices that can extract electrical energy, and is a concept including primary batteries and secondary batteries, as well as chemical batteries such as lithium-ion secondary batteries and nickel-metal hydride batteries, and physical batteries such as electric double layer capacitors.

### Configuration of Electrode Body

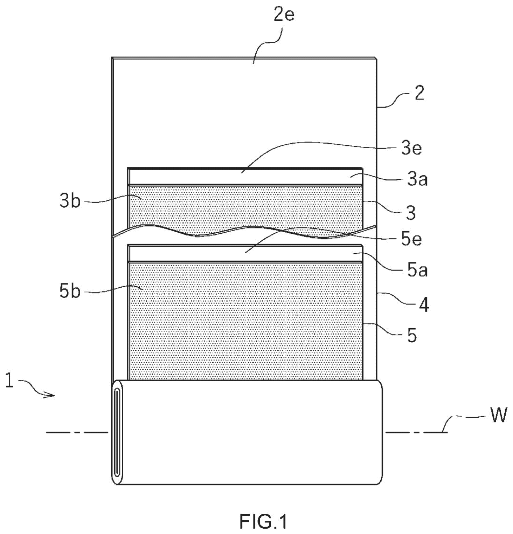

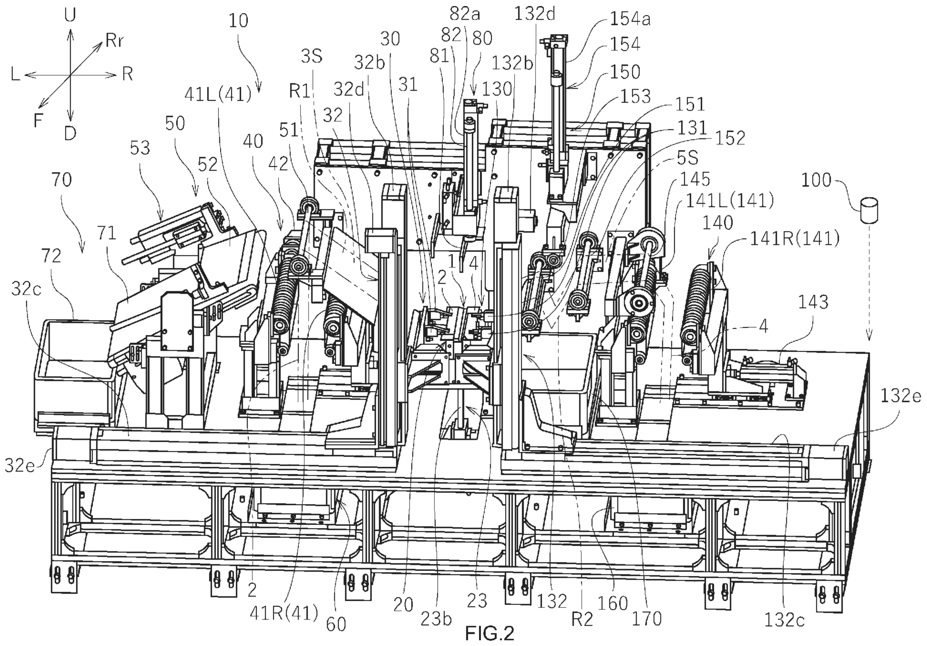

FIG. 1 is a partially cutaway perspective view of an electrode body 1 according to one embodiment. The electrode body 1 is an object to be disassembled by an electrode body disassembly device 10 according to the present embodiment (refer to FIG. 2). The electrode body 1 is removed from an electricity storage device that includes a battery case accommodating the electrode body, an electrode terminal, an electrolytic solution and the like. The type of the electrode body 1 is not particularly limited, and is, for example, an electrode body of a lithium-ion secondary battery. Various methods of removing the electrode body 1 from the electricity storage device have been proposed, and there are no particular limitations.

As shown in FIG. 1, the electrode body 1 is formed by laminating a strip-shaped first separator sheet 2, a strip-shaped negative electrode sheet 3, a strip-shaped second separator sheet 4, and a strip-shaped positive electrode sheet 5 in that order and winding them in a predetermined winding direction. The electrode body 1 is a so-called wound electrode body. Here, the electrode body 1 is wound in a direction in which the first separator sheet 2, the negative electrode sheet 3, the second separator sheet 4, and the positive electrode sheet 5 are arranged in that order from the outermost periphery. The first separator sheet 2 and the second separator sheet 4 are formed to be longer in the longitudinal direction (circumferential direction of winding) than the negative electrode sheet 3 and the positive electrode sheet 5. The winding end portion of the electrode body 1 is composed of the first separator sheet 2 and the second separator sheet 4.

The first separator sheet 2 and the second separator sheet 4 are formed of, for example, a porous resin sheet having required heat resistance and through which an electrolyte can pass. The materials of the first separator sheet 2 and the second separator sheet 4 are not particularly limited. The first separator sheet 2 and the second separator sheet 4 are interposed between the positive electrode sheet 5 and the negative electrode sheet 3, and insulate the positive electrode sheet 5 and the negative electrode sheet 3. The first separator sheet 2 and the second separator sheet 4 may be an adhesive separator whose both surfaces are coated with an adhesive. In this case, the first separator sheet 2, the negative electrode sheet 3, the second separator sheet 4, and the positive electrode sheet 5 are adhered together.

The negative electrode sheet 3 includes a negative electrode collection foil 3a and a negative electrode active material layer 3b formed on the negative electrode collection foil 3a. The negative electrode sheet 3 is a member in which the negative electrode active material layer 3b containing a negative electrode active material is formed on the surface of the negative electrode collection foil 3a. Here, the negative electrode collection foil 3a is composed of a copper foil having a predetermined width and thickness. The negative electrode active material is a material, such as natural graphite, that can occlude lithium ions during charging and, during discharging, release the lithium ions occluded during charging. In addition to natural graphite, generally, various negative electrode active materials have been proposed, and there are no particular limitations. When the electricity storage device is a device other than a lithium-ion secondary battery, the negative electrode sheet 3 may include various negative electrode collection foils 3a and negative electrode active material layers 3b according to the type of the electricity storage device.

The positive electrode sheet 5 includes a positive electrode collection foil 5a and a positive electrode active material layer 5b formed on the positive electrode collection foil 5a. The positive electrode sheet 5 is a member in which the positive electrode active material layer 5b containing a positive electrode active material is formed on the surface of the positive electrode collection foil 5a. Here, the positive electrode collection foil 5a is composed of an aluminum foil having a predetermined width and thickness. The positive electrode active material is a material, such as a lithium transition metal composite material, that can release lithium ions during charging and absorb lithium ions during discharging. In addition to the lithium transition metal composite material, generally, various positive electrode active materials have been proposed, and there are no particular limitations. When the electricity storage device is a device other than a lithium-ion secondary battery, the positive electrode sheet 5 may include various positive electrode collection foils 5a and positive electrode active material layers 5b according to the type of the electricity storage device.

The configuration of the electrode body 1 has been described above. Incidentally, in a procedure of recycling used secondary batteries, there is a strong demand for collecting metals such as nickel, cobalt, and manganese (so-called rare metals). When the secondary battery is crushed during recycling of the secondary battery, metals to be collected and metals other than the metals to be collected are mixed, and the collection rate of the metals to be collected becomes relatively low. Therefore, the inventors thought that, if the positive electrode and the negative electrode of the electrode body could be disassembled individually without crushing them, the collection rate of the metals to be collected could be made relatively high.

### Outline of Electrode Body Disassembly Device

FIG. 2 is a perspective view of the electrode body disassembly device 10. Hereinafter, for convenience, the left to right direction in FIG. 2 will be referred to as a left to right direction, and the depth direction in FIG. 2 will be referred to as a front to rear direction. In the drawings, the front, rear, left, right, up and down are represented by the symbols F, Rr, L, R, U, and D. As shown in FIG. 2, the electrode body disassembly device 10 includes an electrode body accommodation part 20, a first gripping unit 30, a first transfer unit 40, a first separation device 50, a first separator collection unit 60, a negative electrode sheet collection unit 70, a second gripping unit 130, a second transfer unit 140, a second separation device 150, a second separator collection unit 160, a positive electrode sheet collection unit 170, a positive and negative electrode separation device 80, and a control device 100.

The electrode body 1 before disassembly is set in the electrode body accommodation part 20. The electrode body disassembly device 10 is configured to unwind the wound electrode body 1 by pulling the first separator sheet 2 of the electrode body 1 and also pulling the second separator sheet 4. In the procedure of unwinding the electrode body 1, the electrode body 1 rotates approximately about the winding axis W (refer to FIG. 1) inside the electrode body accommodation part 20.

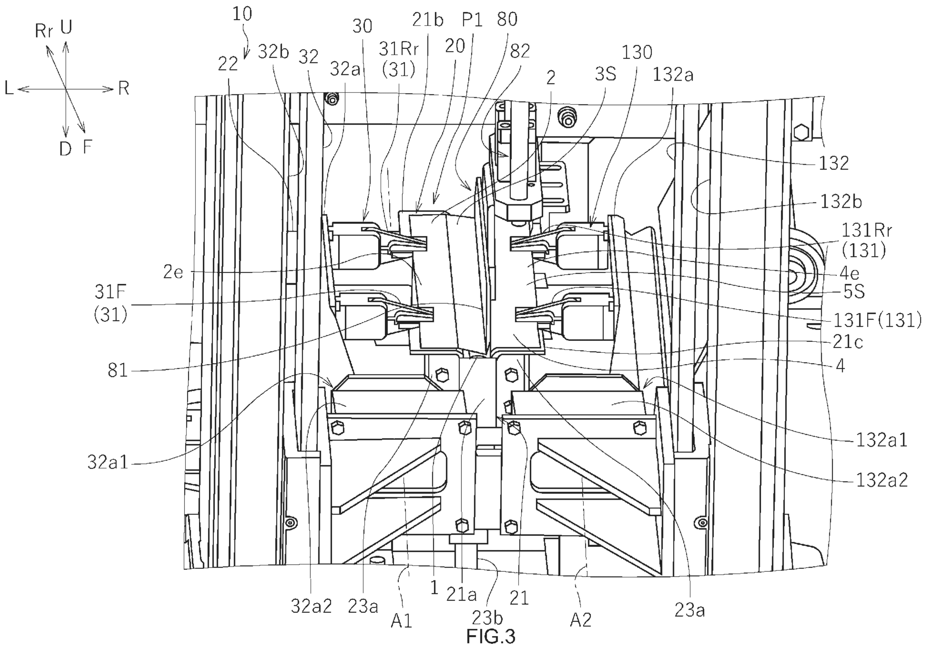

The first gripping unit 30 grips a first outer end 2e (refer to FIG. 3), which is a winding outer end of the first separator sheet 2 that has protruded outside the electrode body accommodation part 20. The negative electrode sheet 3 is attached to the first separator sheet 2. Since the negative electrode sheet 3 is shorter in the longitudinal direction than the first separator sheet 2, the winding end portion of a laminate sheet of the first separator sheet 2 and the negative electrode sheet 3 (hereinafter referred to as a negative electrode laminate sheet 3S, refer to FIG. 3) is composed of only the first separator sheet 2. The first gripping unit 30 grips and moves the first outer end 2e of the first separator sheet 2 in the initial stage of unwinding the electrode body 1, and attaches the first separator sheet 2 to the first transfer unit 40. In the present embodiment, the first gripping unit 30 is disposed on the left side of the electrode body accommodation part 20.

The first transfer unit 40 transfers the first separator sheet 2 by nipping the first separator sheet 2 between a pair of first nip rollers 41 and rotating the pair of first nip rollers 41. The first transfer unit 40 is disposed further to the left side of the first gripping unit 30. The first separation device 50 separates the first separator sheet 2 and the negative electrode sheet 3 at a position upstream (on the side of the electrode body accommodation part 20) from the first transfer unit 40 on a transfer path R1 of the first separator sheet 2. Therefore, the first transfer unit 40 transfers only the first separator sheet 2 with the pair of first nip rollers 41. The first separator sheet 2 is sent to the first separator collection unit 60 by the first transfer unit 40. The negative electrode sheet 3 separated from the first separator sheet 2 advances as the first separator sheet 2 is transferred, and is collected in the negative electrode sheet collection unit 70 disposed downstream from the first separation device 50.

The second gripping unit 130 grips a second outer end 4e (refer to FIG. 3), which is a winding outer end of the second separator sheet 4 that has protruded outside the electrode body accommodation part 20. The positive electrode sheet 5 is attached to the second separator sheet 4. Since the positive electrode sheet 5 is shorter in the longitudinal direction than the second separator sheet 4, the winding end portion of a laminate sheet of the second separator sheet 4 and the positive electrode sheet 5 (hereinafter referred to as a positive electrode laminate sheet 5S, refer to FIG. 3) is composed of only the second separator sheet 4. The second gripping unit 130 grips and moves the second outer end 4e of the second separator sheet 4 in the initial stage of unwinding the electrode body 1, and attaches the second separator sheet 4 to the second transfer unit 140. In the present embodiment, the second gripping unit 130 is disposed on the right side of the electrode body accommodation part 20.

The second transfer unit 140 transfers the second separator sheet 4 by nipping the second separator sheet 4 between a pair of second nip rollers 141 and rotating the pair of second nip rollers 141. The second transfer unit 140 is disposed further to the right side of the second gripping unit 130. The second separation device 150 separates the second separator sheet 4 and the positive electrode sheet 5 at a position upstream (on the side of the electrode body accommodation part 20) from the second transfer unit 140 on a transfer path R2 of the second separator sheet 4. Therefore, the second transfer unit 140 transfers only the second separator sheet 4 with the pair of second nip rollers 141. The second separator sheet 4 is sent to the second separator collection unit 160 by the second transfer unit 140. The positive electrode sheet 5 separated from the second separator sheet 4 falls into the positive electrode sheet collection unit 170 disposed below the second separation device 150.

The positive and negative electrode separation device 80 assists with separation into the negative electrode laminate sheet 3S and the positive electrode laminate sheet 5S when the first gripping unit 30 pulls the negative electrode laminate sheet 3S and the second gripping unit 130 pulls the positive electrode laminate sheet 5S. The positive and negative electrode separation device 80 assists with separation of the electrode body 1 into the negative electrode laminate sheet 3S and the positive electrode laminate sheet 5S by inserting a center scraper 81 between the negative electrode laminate sheet 3S and the positive electrode laminate sheet 5S. The positive and negative electrode separation device 80 is provided above the electrode body accommodation part 20.

### Electrode Body Accommodation Part

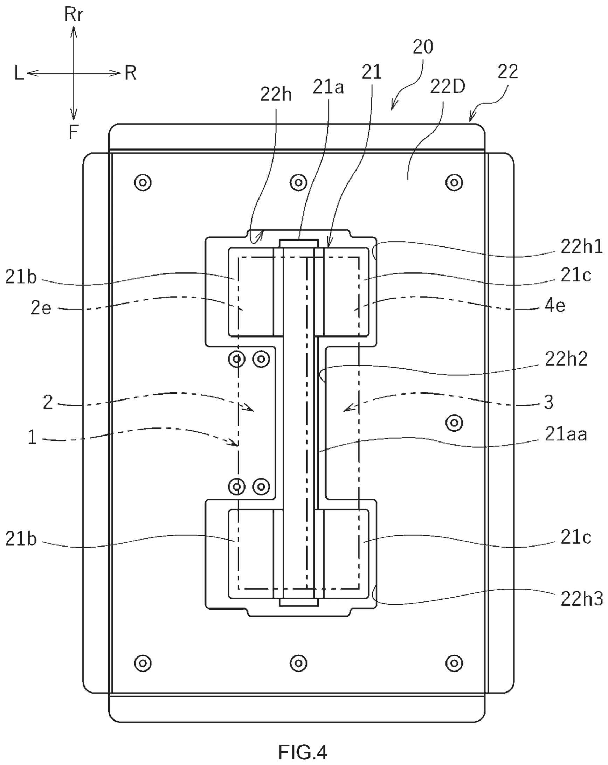

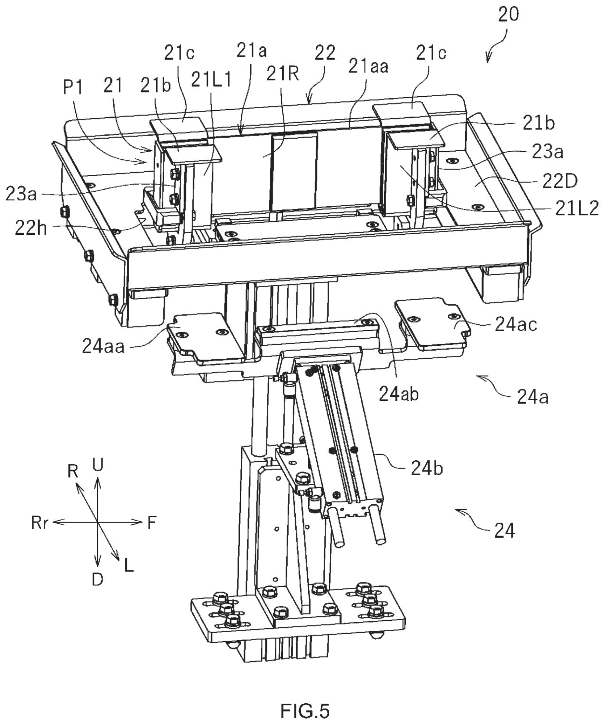

FIG. 3 is a perspective view of the electrode body accommodation part 20. As shown in FIG. 3, the electrode body accommodation part 20 includes a holding jig 21, a rotation box 22 (refer to FIG. 4 and FIG. 5), a jig lowering device 23 (refer to FIG. 2), and an electrode body support device 24 (refer to FIG. 5).

The holding jig 21 holds the electrode body 1 at a stage before the first outer end 2e is pulled by the first gripping unit 30, and the second outer end 4e is pulled by the second gripping unit 130. The holding jig 21 is a jig having an open side and capable of accommodating the electrode body 1. In the present embodiment, the holding jig 21 has an opening on the upper surface. The holding jig 21 includes a holding part 21a, a first placement part 21b, and a second placement part 21c.

The holding part 21a is a case capable of accommodating the electrode body 1. The holding part 21a is an example of the case in the present invention. FIG. 4 is a plan view of the electrode body accommodation part 20. As shown in FIG. 4, the holding part 21a has an opening on the upper surface. In the present embodiment, the holding part 21a has a length in the left to right direction that is shorter than the length in the front to rear direction. The holding part 21a holds the electrode body 1 such that the winding axis W (refer to FIG. 1) is oriented substantially in the front to rear direction. That is, the width direction of the electrode body 1 accommodated in the holding part 21a substantially matches the front to rear direction of the holding part 21a. In the present embodiment, the electrode body 1 is accommodated in the holding part 21a such that the winding direction of the electrode body 1 is a clockwise direction in a front view (refer to FIG. 3). FIG. 5 is a perspective view of the periphery of the electrode body accommodation part 20. As shown in FIG. 5, the holding part 21a includes a right side surface 21R, a first left side surface 21L1, and a second left side surface 21L2. The right side surface 21R is a side surface that extends in the front to rear direction and upward. The first left side surface 21L1 and the second left side surface 21L2 are side surfaces that are positioned to the left side of the right side surface 21R and extend in the front to rear direction and upward. The first left side surface 21L1 is formed on the rear end side of the holding part 21a. The second left side surface 21L2 is formed on the front end side of the holding part 21a. The total length of the length of the first left side surface 21L1 in the front to rear direction and the length of the second left side surface 21L2 in the front to rear direction is shorter than the length of the right side surface 21R in the front to rear direction. Therefore, a peripheral part 21aa of the opening of the holding part 21a has a substantially C-shape in a plan view. The length of the first left side surface 21L1 in the front to rear direction is substantially the same as the length of the first placement part 21b in the front to rear direction. The length of the second left side surface 21L2 in the front to rear direction is substantially the same as the length of the second placement part 21c in the front to rear direction. When the electrode body 1 (refer to FIG. 1) is accommodated in the holding part 21a, the electrode body 1 is held between the first left side surface 21L1 and the second left side surface 21L2 in a state where it is exposed to the outside of the holding jig 21. In the present embodiment, the electrode body 1 is held such that the winding direction of the electrode body 1 is a clockwise direction in a front view.

As shown in FIG. 4, the first placement part 21b is a portion on which the first outer end 2e of the first separator sheet 2 (the negative electrode laminate sheet 3S (refer to FIG. 3)) is placed. The first placement part 21b extends from the peripheral part 21aa of the opening of the holding part 21a toward the outside of the holding part 21a at positions of both ends in the width direction of the electrode body 1 accommodated in the holding part 21a. In the present embodiment, as shown in FIG. 5, the first placement part 21b extends to the left side from the upper ends of the first left side surface 21L1 and the second left side surface 21L2. Here, in order to prevent the first separator sheet 2 placed on the first placement part 21b from sliding down from the first placement part 21b, an anti-slip material such as a tape may be applied to the first placement part 21b. Here, the first placement part 21b may be provided not only at the front end and the rear end of the peripheral part 21aa, but also between the front end and the rear end of the peripheral part 21aa.

As shown in FIG. 4, the second placement part 21c is a portion on which the second outer end 4e of the second separator sheet 4 (the positive electrode laminate sheet 5S (refer to FIG. 3)) is placed. The second placement part 21c extends from the side opposite to the first placement part 21b with respect to the opening of the holding part 21a within the peripheral part 21aa of the opening of the holding part 21a toward the outside of the holding part 21a at positions of both ends in the width direction of the electrode body 1 accommodated in the holding part 21a. In the present embodiment, as shown in FIG. 5, the second placement part 21c extends from the upper end of the right side surface 21R to the right side. The second placement part 21c extends from the front end side and the rear end side of the right side surface 21R. Similar to the first placement part 21b, in order to prevent the second separator sheet 4 from falling off of the second placement part 21c, an anti-slip function material such as a tape may be applied to the second placement part 21c. In addition, the second placement part 21c may be provided not only on the front end side and the rear end side of the right side surface 21R, but also between the front end and the rear end of the right side surface 21R.

As shown in FIG. 3, the rotation box 22 is a box-shaped member in which the electrode body 1 released from the holding jig 21 is accommodated. The rotation box 22 has an open upper surface. The holding jig 21 is set at a predetermined position of the rotation box 22. A positioning member 23a that determines the set position of the holding jig 21 will be described when the jig lowering device 23 is described. When the position of the holding jig 21 is determined, the positions of the first outer end 2e of the first separator sheet 2 (the negative electrode laminate sheet 3S) and the second outer end 4e of the second separator sheet 4 (the positive electrode laminate sheet 5S) are determined. The electrode body 1 released from the holding jig 21 rotates approximately about the winding axis W (refer to FIG. 1) inside the rotation box 22 as the first separator sheet 2, the negative electrode sheet 3, the second separator sheet 4, and the positive electrode sheet 5 are unwound. The length of the rotation box 22 in the left to right direction is longer than the rotation diameter of the electrode body 1 such that the electrode body 1 is allowed to move in the left to right direction.

As shown in FIG. 4, on a bottom surface 22D of the rotation box 22, a through-hole 22h that penetrates in the up and down direction is formed. The through-hole 22h has a substantially H-shape in a plan view. The through-hole 22h is formed to be slightly larger than the holding jig 21 in a plan view. Therefore, the holding jig 21 can pass through the through-hole 22h, and can move below and above the bottom surface 22D. The through-hole 22h includes a first through-hole 22h1, a second through-hole 22h2, and a third through-hole 22h3. The second through-hole 22h2 is disposed in front of the first through-hole 22h1. The third through-hole 22h3 is disposed in front of the second through-hole 22h2. The first through-hole 22h1 is connected to the second through-hole 22h2. The second through-hole 22h2 is connected to the third through-hole 22h3. The length of the second through-hole 22h2 in the left to right direction is slightly longer than the length of the holding part 21a in the left to right direction and is shorter than the length of the electrode body 1 accommodated in the holding part 21a in the up and down direction. In addition, the length of the second through-hole 22h2 in the front to rear direction is shorter than the length of the electrode body 1 accommodated in the holding part 21a in the front to rear direction.

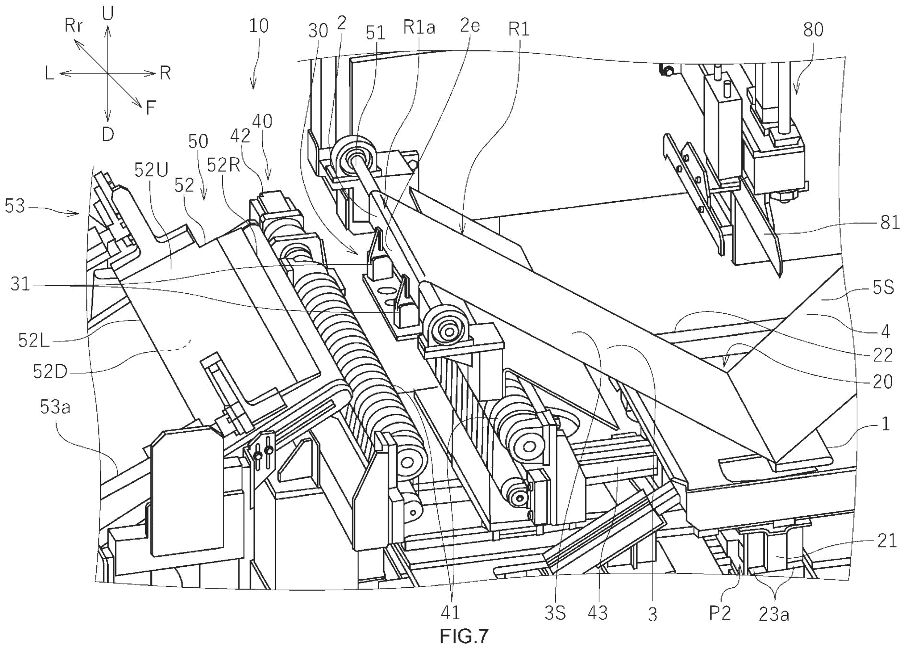

The jig lowering device 23 shown in FIG. 3 is a device that moves the holding jig 21 between an accommodation position P1 and a separation position P2 (refer to FIG. 7). The jig lowering device 23 is an example of the jig movement device in the present invention. The accommodation position P1 is a position where the electrode body 1 is accommodated in the holding part 21a. In the present embodiment, the accommodation position P1 is a position of the holding jig 21 when the bottom surface of the holding part 21a is substantially flush with the bottom surface 22D of the rotation box 22. The separation position P2 is a position where the holding part 21a is separated from the electrode body 1. In the present embodiment, the separation position P2 is a position below the rotation box 22. In a state where the holding jig 21 is positioned at the accommodation position P1, the first outer end 2e is gripped by the first gripping unit 30 and the second outer end 4e is gripped by the second gripping unit 130, the holding jig 21 is then lowered below the rotation box 22 (refer to FIG. 7, in FIG. 7, the holding jig 21 is lowered). Accordingly, the holding jig 21 is moved from the accommodation position P1 to the separation position P2. The jig lowering device 23 includes the positioning member 23a that supports the holding jig 21 and determines a set position of the holding jig 21, and an air cylinder 23b that supports the positioning member 23a and expands and contracts in the up and down direction (refer to FIG. 2). However, the configuration of the jig lowering device 23 is not particularly limited.

As shown in FIG. 5, the electrode body support device 24 is disposed diagonally downward to the left of the rotation box 22. The electrode body support device 24 is a device that supports the electrode body 1 together with the rotation box 22 after the electrode body 1 (refer to FIG. 4) is released from the holding jig 21. The electrode body support device 24 includes a support member 24a and an air cylinder 24b.

The support member 24a has substantially the same outer shape as the through-hole 22h in a plan view. The support member 24a has a slightly smaller outer shape than the through-hole 22h in a plan view. The support member 24a includes a first support member 24aa, a second support member 24ab, and a third support member 24ac. The first support member 24aa, the second support member 24ab and the third support member 24ac are disposed side by side in the front to rear direction. The second support member 24ab is positioned in front of the first support member 24aa. The third support member 24ac is positioned in front of the second support member 24ab. The first support member 24aa has a shape that is convex toward the rear. The second support member 24ab has a shape that extends in the front to rear direction. The third support member 24ac has a shape that is convex toward the front.

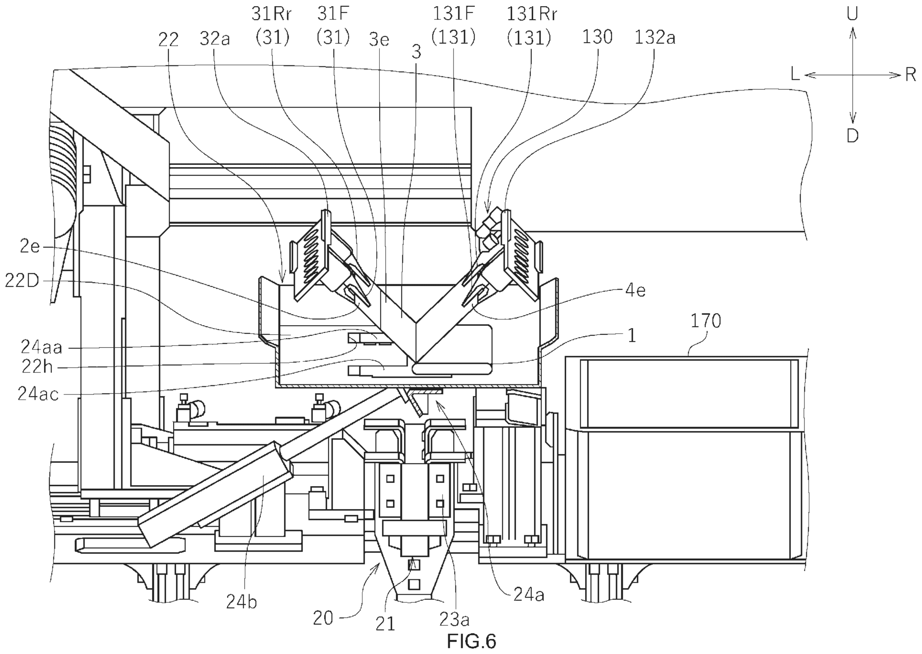

The air cylinder 24b is a cylinder that expands and contracts diagonally upward to the right and diagonally downward to the left, and moves the support member 24a toward or away from the rotation box 22. FIG. 6 is a partial cross-sectional view of the periphery of the electrode body accommodation part 20 when the air cylinder 24b is extended. When the air cylinder 24b extends diagonally upward to the right, the support member 24a is moved diagonally upward to the right. Accordingly, the support member 24a is disposed inside the through-hole 22h (refer to FIG. 4). In this case, the upper surface of the support member 24a is substantially flush with the bottom surface 22D of the rotation box 22. When the air cylinder 24b contracts diagonally downward to the left, the support member 24a moves away from the rotation box 22. After the holding jig 21 is moved below the rotation box 22 and before the electrode body 1 is unwound, the air cylinder 24b moves the support member 24a such that the upper surface of the support member 24a is substantially flush with the bottom surface 22D of the rotation box 22. Here, the direction in which the air cylinder 24b expands and contracts is not limited thereto. In addition, the actuator that moves the support member 24a is not limited to the air cylinder.

### Positive and Negative Electrode Separation Device

As shown in FIG. 3, the positive and negative electrode separation device 80 includes the center scraper 81 and a scraper lifting device 82. The center scraper 81 is an example of the guide in the present invention. The center scraper 81 is a member that guides the negative electrode sheet 3 (refer to FIG. 6). In the present embodiment, the center scraper 81 guides the negative electrode sheet 3 toward the first separator sheet 2 (that is, the left side). When the first outer end 2e and the second outer end 4e are drawn out, and an outer end 3e of the negative electrode sheet 3 is exposed between the first separator sheet 2 and the second separator sheet 4, the center scraper 81 is disposed between the first separator sheet 2 and the second separator sheet 4. The outer end 3e is a negative electrode outer end in the present invention. The center scraper 81 is a plate-shaped member that extends in the front to rear direction and the up and down direction. The scraper lifting device 82 can lower the center scraper 81 such that the lower end of the center scraper 81 is disposed between the first outer end 2e and the second outer end 4e and raise the center scraper 81 such that the lower end of the center scraper 81 is removed from between the first outer end 2e and the second outer end 4e. As shown in FIG. 2, here, the scraper lifting device 82 includes an air cylinder 82a that expands and contracts in the up and down direction. FIG. 3 shows a state in which the center scraper 81 is lowered. As shown in FIG. 3, the center scraper 81 is lowered by the scraper lifting device 82, and inserted between the first outer end 2e and the second outer end 4e of the electrode body 1 before it is unwound. When the scraper lifting device 82 raises the center scraper 81, the center scraper 81 is positioned above the rotation box 22. However, the position of the center scraper 81 when the center scraper 81 is moved from the position between the first outer end 2e and the second outer end 4e is not limited thereto.

As shown in FIG. 3, in the present embodiment, since the electrode body 1 is wound in a clockwise direction in a front view, the outer end 3e of the negative electrode sheet 3 (refer to FIG. 1) and an outer end 5e of the positive electrode sheet 5 (refer to FIG. 1) are positioned to the right side of the midpoint of the holding jig 21 in the left to right direction. Therefore, the center scraper 81 is positioned to the right side of the midpoint of the holding jig 21 in the left to right direction. When the center scraper 81 descends, the outer end 3e of the negative electrode sheet 3 is prevented from being positioned to the right side of the center scraper 81.

### First Gripping Unit

As shown in FIG. 3, the first gripping unit 30 includes a pair of first clamps 31 and a first movement device 32. The first gripping unit 30 is a portion that grips the first outer end 2e of the first separator sheet 2. The pair of first clamps 31 grip the first outer end 2e of the first separator sheet 2 (the negative electrode laminate sheet 3S). The pair of first clamps 31 include a front side clamp 31F and a rear side clamp 31Rr provided behind the front side clamp 31F. The front side clamp 31F grips the front side of the first outer end 2e. The rear side clamp 31Rr grips the rear side of the first outer end 2e. The first clamp 31 is disposed between the two first placement parts 21b arranged in the front to rear direction. Therefore, the first clamp 31 (the first gripping unit 30) grips an intermediate part of the first outer end 2e in the width direction (the front to rear direction in this case). Here, the number of first clamps 31 is not particularly limited.

The first movement device 32 is a device that moves the first gripping unit 30 such that the first separator sheet 2 is introduced into the first nip roller 41 (refer to FIG. 1). In the present embodiment, the first movement device 32 moves the pair of first clamps 31 along the predetermined transfer path R1 (refer to FIG. 2) of the first separator sheet 2. Here, "moving along the transfer path R1 of the first separator sheet 2" is not limited to moving along a path that matches the transfer path R1 of the first separator sheet 2, but broadly means moving to pass through a predetermined side (between the pair of first nip rollers 41 or above the bending roller 51 in this case) of a member (for example, the pair of first nip rollers 41 of the first transfer unit 40, and a bending roller 51 of the first separation device 50 to be described below) disposed on the transfer path R1. Here, the path along which the first movement device 32 moves the pair of first clamps 31 extends along a path in the transfer path R1 until it passes between at least the pair of first nip rollers 41. Details of the path along which the first movement device 32 moves the pair of first clamps 31 will be described below. The first gripping unit 30 grips the first separator sheet 2 with the pair of first clamps 31, the first movement device 32 moves the pair of first clamps 31, and thus the first separator sheet 2 is pulled.

As shown in FIG. 3, the first movement device 32 includes a support unit 32a that supports the pair of first clamps 31, an up and down direction guide 32b that supports the support unit 32a such that it can move in the up and down direction, a left to right direction guide 32c (refer to FIG. 2) that supports the up and down direction guide 32b such that it can move in the left to right direction, an up and down direction movement motor 32d (refer to FIG. 2) that moves the support unit 32a along the up and down direction guide 32b, and a left to right direction movement motor 32e (refer to FIG. 2) that moves the up and down direction guide 32b along the left to right direction guide 32c.

As shown in FIG. 3, the support unit 32a extends in the front to rear direction. The support unit 32a includes a rotation device 32a1 that rotates the pair of first clamps 31 in the up and down direction. The rotation device 32a1 includes a rotation motor 32a2 having a rotation shaft that rotates about an axis A1 offset from the base ends (the left ends in this case) of the pair of first clamps 31 when viewed in the front to rear direction. The axis A1 of the rotation shaft of the rotation motor 32a2 extends in the front to rear direction. The pair of first clamps 31 rotate about the axis A1. The orientation of the pair of first clamps 31 can be changed by the rotation device 32a1.

As shown in FIG. 2, the up and down direction guide 32b extends in the up and down direction. When the up and down direction movement motor 32d is driven, the support unit 32a and the pair of first clamps 31 supported thereby are positioned along the up and down direction guide 32b in the up and down direction. The left to right direction guide 32c extends in the left to right direction. When the left to right direction movement motor 32e is driven, the up and down direction guide 32b, the support unit 32a, and the pair of first clamps 31 are positioned along the left to right direction guide 32c in the left to right direction. By combining the driving of the up and down direction movement motor 32d and the driving of the left to right direction movement motor 32e, the pair of first clamps 31 can be moved along a predetermined path when viewed in the front to rear direction.

### First Transfer Unit

As shown in FIG. 2, the first transfer unit 40 includes the pair of first nip rollers 41 that rotate with the first separator sheet 2 interposed therebetween. The first nip roller 41 is a member that nips and draws out the first separator sheet 2. The pair of first nip rollers 41 include a driving roller 41L and a driven roller 41R disposed to the right side of the driving roller 41L to face the driving roller 41L. The driving roller 41L and the driven roller 41R are configured to rotate about the rotation shaft that extends in the front to rear direction. The first transfer unit 40 includes a transfer motor 42 that rotates the driving roller 41L and a clamping cylinder 43 (refer to FIG. 7) that moves the driven roller 41R in the left to right direction and moves it toward or away from the driving roller 41L. The clamping cylinder 43 is an air cylinder that expands and contracts in the left to right direction. However, the actuator that moves the driven roller 41R in the left to right direction is not limited to the air cylinder, and may be, for example, a motor.

The first transfer unit 40 drives the clamping cylinder 43 in a state where the first separator sheet 2 is located between the driving roller 41L and the driven roller 41R, and nips the first separator sheet 2 between the driving roller 41L and the driven roller 41R. When the transfer motor 42 is driven, the driving roller 41L rotates such that the side facing the driven roller 41R moves downward, and transfers the first separator sheet 2 downward together with the driven roller 41R. When the first separator sheet 2 is transferred by the first transfer unit 40, it moves on the predetermined transfer path R1. The first separator collection unit 60 is provided below the driving roller 41L and the driven roller 41R.

### First Separation Device

The first separation device 50 separates the first separator sheet 2 and the negative electrode sheet 3 (refer to FIG. 1) at a position upstream from the first transfer unit 40 on the transfer path R1 of the first separator sheet 2. FIG. 7 is a perspective view of the first separation device 50. As shown in FIG. 7, the first separation device 50 includes the bending roller 51, a scraper 52, and a scraper insertion device 53.

The bending roller 51 is provided on the transfer path R1 of the first separator sheet 2 and bends the transfer path R1. The bending roller 51 extends in the front to rear direction. The bending roller 51 is configured to be rotatable about the rotation shaft that extends in the front to rear direction. In the present embodiment, the bending roller 51 is provided on the left side of and above the rotation box 22 of the electrode body accommodation part 20. The first separator sheet 2 is wound around the bending roller 51 from above by the first gripping unit 30. Between the electrode body accommodation part 20 and the bending roller 51, the first separator sheet 2 is transferred diagonally upward to the left.

The bending roller 51 is provided above the pair of first nip rollers 41 of the first transfer unit 40. The bending roller 51 bends the transfer path R1 of the first separator sheet 2 toward the pair of first nip rollers 41 (downward in this case). However, the direction in which the bending roller 51 bends the transfer path R1 of the first separator sheet 2 is not particularly limited. The direction in which the bending roller 51 bends the transfer path R1 of the first separator sheet 2 may be, for example, upward. The angle at which the bending roller 51 bends the transfer path R1 is not particularly limited.

The scraper 52 is a member that separates the first separator sheet 2 and the negative electrode sheet 3. The scraper 52 is formed in a plate shape that extends in the front to rear direction and the left to right direction, and includes an upper surface 52U and a lower surface 52D. The scraper 52 separates the first separator sheet 2 and the negative electrode sheet 3 on the side of the upper surface 52U and the side of the lower surface 52D. A tip part 52R of the scraper 52 has a tapered shape in a front view such that its height in the up and down direction decreases toward the upstream side of the transfer path R1 of the first separator sheet 2. In the present embodiment, the upper surface 52U of the scraper 52 is bent to form a tapered shape of the tip part 52R. Here, the lower surface 52D of the scraper 52 is flat. The width of the scraper 52 in the front to rear direction is longer than the width of the negative electrode sheet 3.

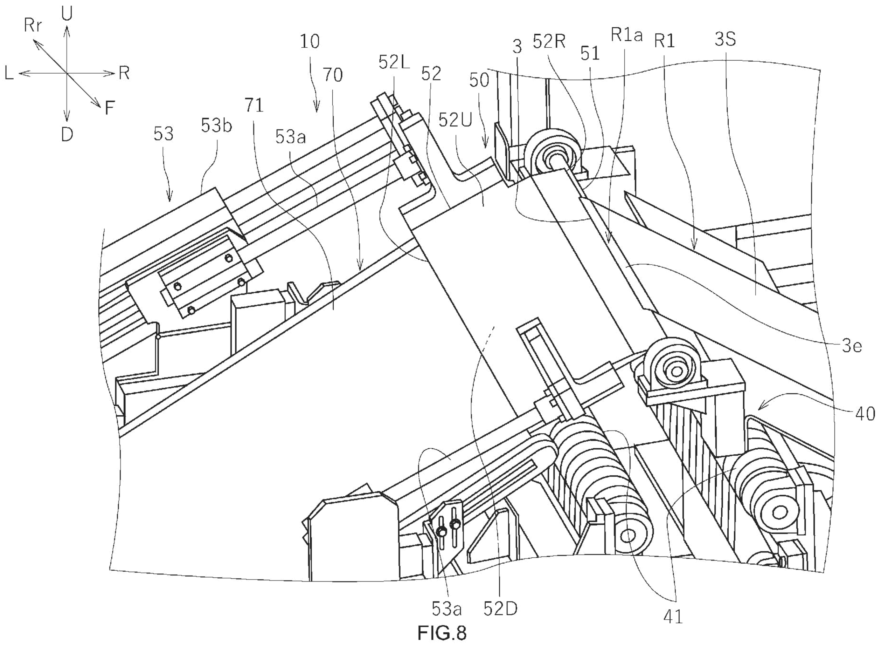

The scraper insertion device 53 inserts the scraper 52 into a bent portion R1a of the transfer path R1 or retracts it from the bent portion R1a. FIG. 8 is a perspective view of the first separation device 50 in a state where the scraper 52 is inserted into the bent portion R1a of the transfer path R1. As shown in FIG. 8, the scraper 52 is disposed at the bent portion R1a of the transfer path R1 of the first separator sheet 2 at the right side end position. The scraper insertion device 53 inserts the scraper 52 into the transfer path R1 after the first outer end 2e of the first separator sheet 2 (refer to FIG. 1) passes through the bent portion R1a and before the outer end 3e of the negative electrode sheet 3 reaches the bent portion R1a. When the scraper 52 is inserted into the transfer path R1 at this timing, the first separator sheet 2 can be wound around the bending roller 51, and the tip part 52R of the scraper 52 enters between the first separator sheet 2 and the negative electrode sheet 3 by the subsequent movement of the first separator sheet 2. When the negative electrode sheet 3 is peeled off from the first separator sheet 2 by the scraper 52, the negative electrode sheet 3 above the first separator sheet 2 rests on the upper surface 52U of the scraper 52. The first separator sheet 2 below the negative electrode sheet 3 is transferred along the side of the lower surface 52D of the scraper 52.

As shown in FIG. 8, the scraper insertion device 53 includes a pair of front and rear guide rods 53a and an insertion cylinder 53b. When the insertion cylinder 53b is driven, the scraper 52 moves along the guide rod 53a toward or away from the bending roller 51. In the present embodiment, the scraper insertion device 53 supports the scraper 52 obliquely such that the tip part 52R of the scraper 52 is positioned higher than a base end 52L. The scraper 52 is inclined upward toward the right side. The scraper insertion device 53 moves the scraper 52 diagonally upward to the right, and causes it approach the bending roller 51. When the scraper insertion device 53 is driven toward the scraper 52, the scraper 52 comes into contact with the surface of the first separator sheet 2 wound around the bending roller 51 (comes into contact with the bending roller 51 with the first separator sheet 2 therebetween).

As shown in FIG. 2, the negative electrode sheet collection unit 70 is disposed below the scraper 52, and includes a guide plate 71 that extends to the left side of the scraper 52, and a negative electrode sheet collection box 72 disposed below the left end of the guide plate 71. The negative electrode sheet 3 separated by the first separation device 50 and placed on the upper surface 52U of the scraper 52 (refer to FIG. 8) is transported onto the guide plate 71 as the first separator sheet 2 is transferred by the first transfer unit 40. The guide plate 71 is inclined downward to the left. The negative electrode sheet 3 that has passed over the guide plate 71 is accommodated in the negative electrode sheet collection box 72 shown in FIG. 2.

### Second Gripping Unit

The second gripping unit 130 shown in FIG. 3 is a portion that grips the second outer end 4e of the second separator sheet 4. The second gripping unit 130 has the same configuration as the first gripping unit 30 that grips the first separator sheet 2. The second gripping unit 130 includes a pair of second clamps 131 and a second movement device 132. The pair of second clamps 131 grip the second outer end 4e of the second separator sheet 4 (the positive electrode laminate sheet 5S). The pair of second clamps 131 include a front side clamp 131F and a rear side clamp 131Rr provided behind the front side clamp 131F. The front side clamp 131F grips the front side of the second outer end 4e. The rear side clamp 131Rr grips the rear side of the second outer end 4e. The second clamp 131 is disposed between the two second placement parts 21c arranged in the front to rear direction. Therefore, the second clamp 131 (the second gripping unit 130) grips an intermediate part of the second outer end 4e in the width direction (the front to rear direction in this case). Here, the number of second clamps 131 is not particularly limited.

The second movement device 132 is a device that moves the second gripping unit 130 such that the second separator sheet 4 is introduced into the second nip roller 141 (refer to FIG. 1). In the present embodiment, the second movement device 132 moves the pair of second clamps 131 along the predetermined transfer path R2 (refer to FIG. 2) of the second separator sheet 4. The meaning of "along the transfer path R2" is the same as in the case of the transfer path R1 (refer to FIG. 2) of the first separator sheet 2. The second movement device 132 includes a support unit 132a including a rotation device 132a1 that rotates the pair of second clamps 131, an up and down direction guide 132b that supports the support unit 132a such that it can move in the up and down direction, a left to right direction guide 132c (refer to FIG. 2) that supports the up and down direction guide 132b such that it can move in the left to right direction, an up and down direction movement motor 132d (refer to FIG. 2) that moves the support unit 132a along the up and down direction guide 132b, and a left to right direction movement motor 132e (refer to FIG. 2) that moves the up and down direction guide 132b along the left to right direction guide 132c. The rotation device 132a1 includes a rotation motor 132a2 having a rotation shaft that rotates about an axis A2 offset from the base ends (the right ends in this case) of the pair of second clamps 131 when viewed in the front to rear direction. The orientation of the pair of second clamps 131 can be changed by the rotation device 132a1. The second gripping unit 130 grips the second separator sheet 4 with the pair of second clamps 131, the second movement device 132 moves the pair of second clamps 131, and thus the second separator sheet 4 is pulled.

### Second Transfer Unit

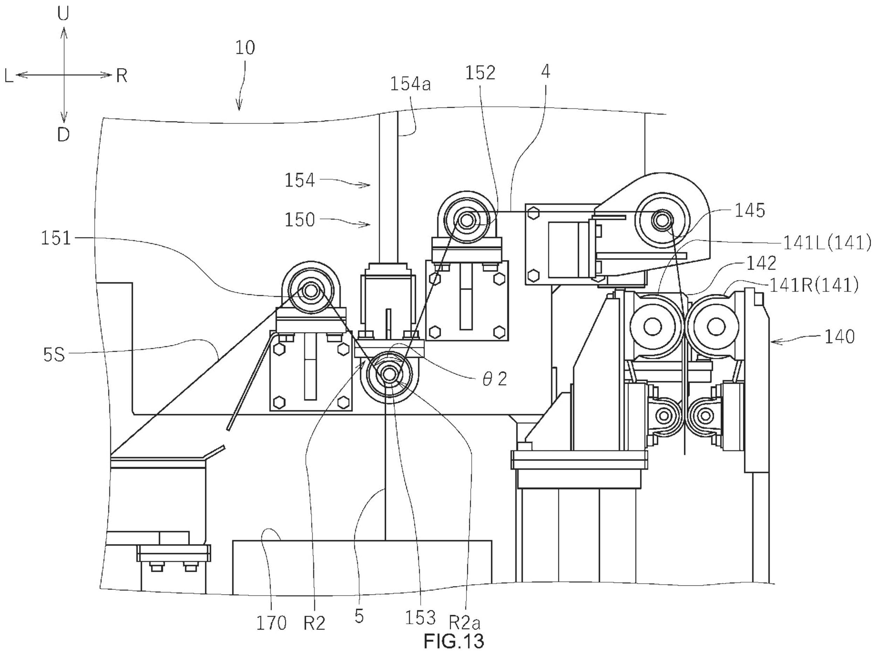

As shown in FIG. 2, the second transfer unit 140 that transfers the second separator sheet 4 has the same configuration as the first transfer unit 40 that transfers the first separator sheet 2. The second transfer unit 140 includes the pair of second nip rollers 141 that rotate with the second separator sheet 4 interposed therebetween. The second nip roller 141 is a member that nips and draws out the second separator sheet 4. The pair of second nip rollers 141 include a driving roller 141L and a driven roller 141R disposed to the right side of the driving roller 141L to face the driving roller 141L. The second transfer unit 140 includes a transfer motor 142 (refer to FIG. 13) that rotates the driving roller 141L and a clamping cylinder 143 that moves the driven roller 141R in the left to right direction and moves it toward or away from the driving roller 141L. Above the driving roller 141L and the driven roller 141R, a bending roller 145 that bends the transfer path R2 of the second separator sheet 4, which has been substantially horizontal up to that point, in a substantially vertical direction, and guides it toward the driving roller 141L and the driven roller 141R is provided.

The second transfer unit 140 drives the clamping cylinder 143 in a state where the second separator sheet 4 is located between the driving roller 141L and the driven roller 141R, and nips the second separator sheet 4 between the driving roller 141L and the driven roller 141R (refer to FIG. 13). When the transfer motor 142 is driven, the driving roller 141L rotates such that the side facing the driven roller 141R moves downward, and transfers the second separator sheet 4 downward together with the driven roller 141R. The second separator collection unit 160 is provided below the driving roller 141L and the driven roller 141R.

### Second Separation Device

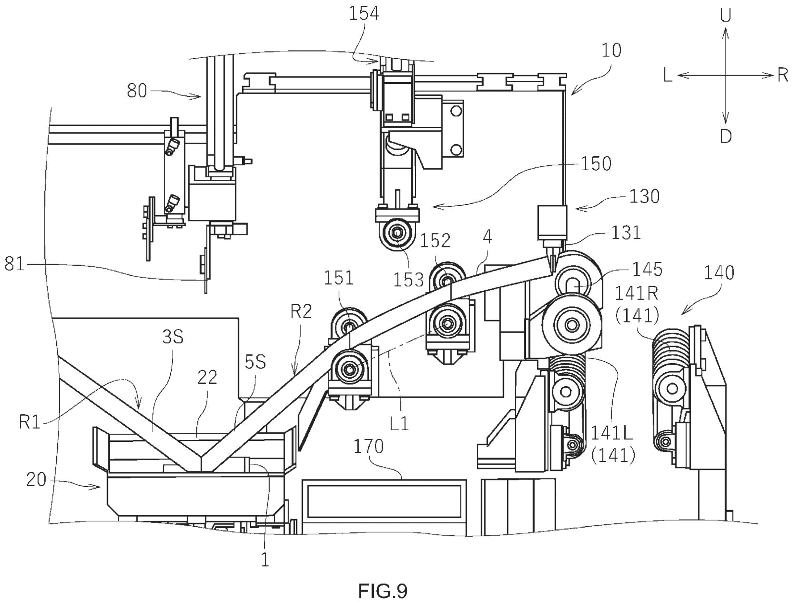

The second separation device 150 separates the second separator sheet 4 and the positive electrode sheet 5 at a position upstream from the second transfer unit 140 on the transfer path R2 of the second separator sheet 4. FIG. 9 is a perspective view of the second separation device 150. Here, FIG. 9 is a diagram showing a state in which the second separator sheet 4 is being wound around the second separation device 150. As shown in FIG. 9, the second separation device 150 includes an upstream roller 151, a downstream roller 152, a peeling roller 153, and a roller lowering device 154.

The upstream roller 151 is provided on the transfer path R2 of the second separator sheet 4, and the second separator sheet 4 (the positive electrode laminate sheet 5S) is wound therearound. The upstream roller 151 extends in the front to rear direction. The upstream roller 151 is configured to be rotatable about the rotation shaft that extends in the front to rear direction. In the present embodiment, the upstream roller 151 is provided on the right side of and above the rotation box 22 of the electrode body accommodation part 20. The second separator sheet 4 (the positive electrode laminate sheet 5S) is wound around the upstream roller 151 from above by the second gripping unit 130. Between the electrode body accommodation part 20 and the upstream roller 151, the second separator sheet 4 (the positive electrode laminate sheet 5S) is transferred diagonally upward to the right.

The downstream roller 152 is provided downstream from the upstream roller 151 on the transfer path R2 of the second separator sheet 4, and the second separator sheet 4 is wound therearound. Here, the downstream roller 152 is provided on the right side of and above the upstream roller 151. The downstream roller 152 extends in the front to rear direction. The downstream roller 152 is configured to be rotatable about the rotation shaft that extends in the front to rear direction. The second separator sheet 4 is wound around the upstream roller 151 from above by the second gripping unit 130. The downstream roller 152 is provided at substantially the same height as the bending roller 145 of the second transfer unit 140. Between the downstream roller 152 and the bending roller 145, the second separator sheet 4 is transferred substantially horizontally.

The peeling roller 153 is disposed between the upstream roller 151 and the downstream roller 152 in the left to right direction. The peeling roller 153 is a roller that is provided on the transfer path R2 of the second separator sheet 4, bends the transfer path R2, and separates the second separator sheet 4 and the positive electrode sheet 5. The peeling roller 153 extends in the front to rear direction. The peeling roller 153 rotates about the rotation shaft that extends in the front to rear direction.

The roller lowering device 154 can lower the peeling roller 153 and move it below a line L1 connecting the upstream roller 151 and the downstream roller 152. Here, the roller lowering device 154 moves the peeling roller 153 downward and causes it to collide with the second separator sheet 4. In addition, the roller lowering device 154 can raise the peeling roller 153 and move it above the line L1 connecting the upstream roller 151 and the downstream roller 152. As shown in FIG. 2, the roller lowering device 154 includes an air cylinder 154a that expands and contracts in the up and down direction. However, the configuration of the roller lowering device 154 is not limited thereto. For example, the roller lowering device 154 may include a motor for raising and lowering the peeling roller 153.

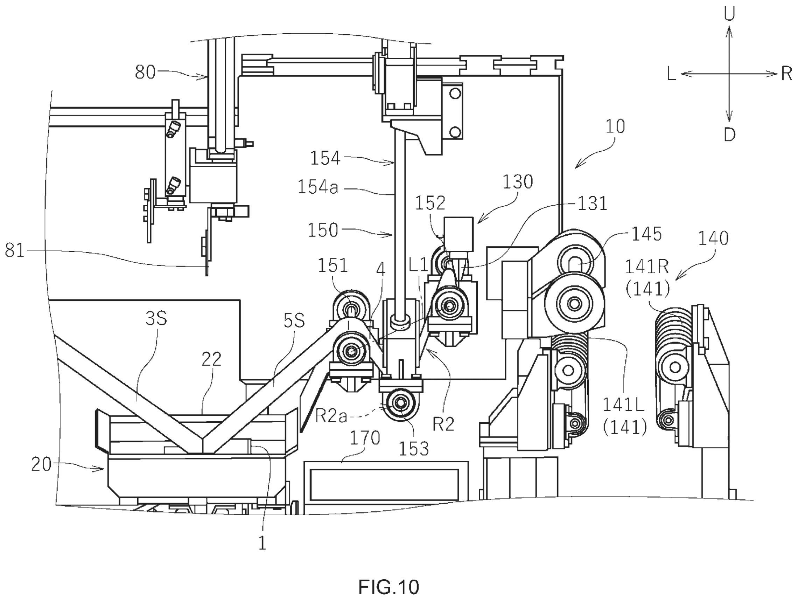

FIG. 10 is a perspective view of the second separation device 150 in a state where the peeling roller 153 is lowered. As shown in FIG. 10, when the roller lowering device 154 is driven to lower the peeling roller 153 below the line L1 in a state where the positive electrode laminate sheet 5S is wound around the upstream roller 151 and the downstream roller 152, the transfer path R2 is bent into a V-shape by the peeling roller 153. When the transfer path R2 is bent into a V-shape, the positive electrode sheet 5 is separated from the second separator sheet 4. The positive electrode sheet collection unit 170 that collects the positive electrode sheet 5 is provided below the peeling roller 153. The angle at which the transfer path R2 is bent by the peeling roller 153 is not particularly limited.

Here, the upstream roller 151 and the downstream roller 152 may be arranged in a direction other than the left to right direction, for example, the up and down direction. The movement direction of the peeling roller 153 is not particularly limited as long as it is a direction that intersects a line connecting the upstream roller 151 and the downstream roller 152.

### Control Device

The control device 100 shown in FIG. 2 is connected to the air cylinder 23b of the jig lowering device 23, the air cylinder 24b of the electrode body support device 24 (refer to FIG. 5), the pair of first clamps 31 of the first gripping unit 30, the rotation motor 32a2 (refer to FIG. 3), the up and down direction movement motor 32d, the left to right direction movement motor 32e, the transfer motor 42 and the clamping cylinder 43 of the first transfer unit 40 (refer to FIG. 7), the insertion cylinder 53b of the scraper insertion device 53 (refer to FIG. 7), the pair of second clamps 131 of the second gripping unit 130, the rotation motor 132a2 (refer to FIG. 3), the up and down direction movement motor 132d, the left to right direction movement motor 132e, the transfer motor 142 and the clamping cylinder 143 of the second transfer unit 140, the air cylinder 154a of the roller lowering device 154, and the air cylinder 82a of the scraper lifting device 82, and controls operations of these components. The control device 100 controls respective components, and causes them to perform operations described below in the process of disassembling the electrode body 1.

The configuration of the control device 100 is not particularly limited. The control device 100 may include, for example, a microcomputer. The microcomputer may include, for example, an interface (I/F) that receives data and the like from external devices, a central processing unit (CPU) that executes program instructions, a read only memory (ROM) that stores the program executed by the CPU, a random access memory (RAM) used as a working area that opens the program, and a storage device such as a memory that stores the program and various types of data. The control device 100 may include, for example, a programmable controller.

### Electrode Body Disassembly Process

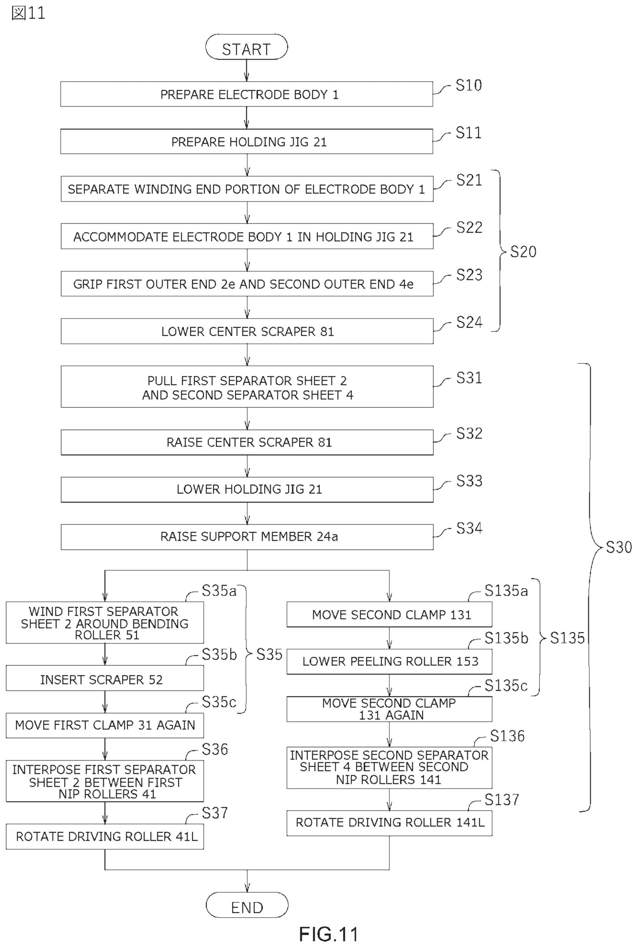

Hereinafter, an example of a process of disassembling the electrode body 1 using the electrode body disassembly device 10 according to the present embodiment will be described. FIG. 11 is a flowchart showing the process of disassembling the electrode body 1.

### Separation of Negative Electrode and Positive Electrode

An electrode body preparation step S10 shown in FIG. 11 is a step of preparing the wound electrode body 1 (refer to FIG. 1) in which the strip-shaped negative electrode sheet 3 and the strip-shaped positive electrode sheet 5 are laminated with the strip-shaped first separator sheet 2 and the strip-shaped second separator sheet 4 therebetween and wound in a predetermined winding direction. A holding jig preparation step S11 is a step of preparing the holding jig 21 (refer to FIG. 3) having the holding part 21a that can accommodate the electrode body 1. A separation preparation step S20 is a step of preparing separation of the electrode body 1 into the first separator sheet 2, the negative electrode sheet 3, the second separator sheet 4 and the positive electrode sheet 5. As shown in FIG. 11, the separation preparation step S20 includes an outer end processing step S21, an electrode body accommodation step S22, a gripping step S23, and a scraper lowering step S24.

The outer end processing step S21 is a step of separating the electrode body 1 into the first separator sheet 2, the negative electrode sheet 3, the second separator sheet 4 and the positive electrode sheet 5 at the winding end portion of the electrode body 1. Although the outer end processing step S21 varies depending on the outer end processing of the electrode body 1, for example, a tape (not shown) attached to the outer end is peeled off, the first outer end 2e of the first separator sheet 2 is folded to the left side, and the second outer end 4e of the second separator sheet 4 is folded to the right side.

The electrode body accommodation step S22 is a step of accommodating the electrode body 1 that has undergone the outer end processing step S21 in the holding jig 21. In the electrode body accommodation step S22, the both ends (the front end and the rear end in this case) of the first outer end 2e of the first separator sheet 2 are placed on the first placement part 21b of the holding jig 21 (refer to FIG. 3). In addition, in the electrode body accommodation step S22, the both ends (the front end and the rear end in this case) of the second outer end 4e of the second separator sheet 4 in the width direction are placed on the second placement part 21c of the holding jig 21 (refer to FIG. 3). The outer end processing step S21 and the electrode body accommodation step S22 may be performed manually. However, the outer end processing step S21 and the electrode body accommodation step S22 may also be performed by an automatic device or a semi-automatic device. The outer end processing step S21 may be performed in a state where the electrode body 1 is accommodated in the holding jig 21.

The gripping step S23 is a step of gripping the first outer end 2e of the first separator sheet 2 with the pair of first clamps 31 of the first gripping unit 30 and gripping the second outer end 4e of the second separator sheet 4 with the pair of second clamps 131 of the second gripping unit 130 (refer to FIG. 3). The pair of first clamps 31 grip an intermediate part of the first outer end 2e in the width direction (the front to rear direction in this case) placed on the two first placement parts 21b. The pair of second clamps 131 grip an intermediate part of the second outer end 4e in the width direction (the front to rear direction in this case) placed on the two second placement parts 21c. Here, in the gripping step S23, the first outer end 2e and the second outer end 4e are gripped simultaneously, but the step of gripping the first outer end 2e and the step of gripping the second outer end 4e may be separate steps.

The scraper lowering step S24 is a step of disposing the center scraper 81 that guides the negative electrode sheet 3 between the first outer end 2e and the second outer end 4e such that the outer end 3e of the negative electrode sheet 3 is drawn out toward the first separator sheet 2 (the left side in this case) when the first outer end 2e of the first separator sheet 2 and the second outer end 4e of the second separator sheet 4 are drawn out, and the outer end 3e of the negative electrode sheet 3 is drawn out from the electrode body 1 (a pulling step S31 to be described below). In the scraper lowering step S24, the center scraper 81 is lowered by the scraper lifting device 82, and inserted between the negative electrode laminate sheet 3S and the positive electrode laminate sheet 5S (refer to FIG. 3). When the center scraper 81 is lowered, the center scraper 81 is disposed between the first outer end 2e of the first separator sheet 2 and the second outer end 4e of the second separator sheet 4. Here, the scraper lowering step S24 may be performed before the timing shown in FIG. 11 as long as it is performed before the pulling step S31.

A separation step S30 is a step of pulling the first separator sheet 2 and the second separator sheet 4 and drawing out and separating the first separator sheet 2, the second separator sheet 4, the negative electrode sheet 3 and the positive electrode sheet 5. The separation step S30 includes the pulling step S31, a center scraper raising step S32, a jig lowering step S33, a support member raising step S34, a negative electrode separation step S35, a first separator interposing step S36, a first separator transfer step S37, a positive electrode separation step S135, a second separator interposing step S136, and a second separator transfer step S137.

The pulling step S31 is a step of pulling the first separator sheet 2 gripped by the pair of first clamps 31 diagonally upward to the left by the first movement device 32 and pulling the second separator sheet 4 gripped by the pair of second clamps 131 diagonally upward to the right by the second movement device 132 (refer to FIG. 6). As shown in FIG. 6, when the first separator sheet 2 and the second separator sheet 4 are pulled, the pair of first clamps 31 are rotated 45 degrees clockwise in a front view. In this case, the pair of first clamps 31 are oriented such that their tip parts face diagonally downward to the right. In addition, when the first separator sheet 2 and the second separator sheet 4 are pulled, the pair of second clamps 131 are rotated 45 degrees counterclockwise. In this case, the pair of second clamps 131 are oriented such that their tip parts face diagonally downward to the left. When the first separator sheet 2 and the second separator sheet 4 are pulled, the outer end 3e of the negative electrode sheet 3 is exposed between the first separator sheet 2 and the second separator sheet 4.

The center scraper raising step S32 shown in FIG. 11 is a step of moving the center scraper 81 to a position where it does not come into contact with the electrode body 1 after starting the operation of drawing out the first outer end 2e and the second outer end 4e (the pulling step S31). In the center scraper raising step S32, the scraper lifting device 82 raises the center scraper 81 to a position above the rotation box 22.

The jig lowering step S33 is a step of moving the electrode body 1 gripped by the first gripping unit 30 and the second gripping unit 130 and accommodated in the holding part 21a to the outside of the holding part 21a. In the jig lowering step S33, the jig lowering device 23 lowers the holding jig 21 from the accommodation position P1 (refer to FIG. 3) to the separation position P2 (refer to FIG. 7). When the air cylinder 23b of the jig lowering device 23 contracts, the positioning member 23a moves downward. Therefore, the holding jig 21 passes through the through-hole 22h of the rotation box 22 in the up and down direction and descends. In the present embodiment, since the winding direction of the electrode body 1 is the clockwise direction in a front view, the portion of the electrode body 1 other than the outermost periphery gripped by the first gripping unit 30 and the second gripping unit 130 is positioned to the left side of the outermost periphery of the electrode body 1. Therefore, when the holding jig 21 descends, the electrode body 1 falls toward the left side (refer to FIG. 6). As described above, the length of the second through-hole 22h2 of the through-hole 22h in the left to right direction is shorter than the length of the electrode body 1 in the up and down direction in a state where it is accommodated in the holding jig 21, and the length of the second through-hole 22h2 in the front to rear direction is shorter than the length of the electrode body 1 accommodated in the holding jig 21 in the front to rear direction (refer to FIG. 4). Therefore, when the electrode body 1 falls to the left side, the electrode body 1 does not fall through the through-hole 22h, but is placed on the bottom surface 22D of the rotation box 22. Therefore, the electrode body 1 is removed from the holding part 21a (refer to FIG. 6). Accordingly, the electrode body 1 can rotate freely.

The support member raising step S34 is a step of raising the support member 24a after the holding part 21a is moved to the separation position P2 in the jig lowering step S33. In the support member raising step S34, the support member 24a positioned below the rotation box 22 is moved diagonally upward to the right by the air cylinder 24b. Accordingly, the support member 24a is disposed inside the through-hole 22h of the rotation box 22, and the upper surface of the support member 24a is substantially flush with the bottom surface 22D (refer to FIG. 6). Accordingly, the electrode body 1 does not fall through the through-hole 22h, and the electrode body 1 can rotate.

### Collection of First Separator Sheet and Negative Electrode Sheet

The negative electrode separation step S35 is a step of winding the negative electrode laminate sheet 3S around the bending roller 51, bending the transfer path R1 of the first separator sheet 2, inserting the plate-shaped scraper 52 into the bent portion R1a of the transfer path R1, and separating the first separator sheet 2 and the negative electrode sheet 3 on the sides of the lower surface 52D and the upper surface 52U of the scraper 52. The negative electrode separation step S35 includes a winding step S35a, a scraper insertion step S35b, and a clamp re-moving step S35c.

The winding step S35a is a step of moving the pair of first clamps 31 above and to the left side of the bending roller 51, additionally moving them from there to below and to the left side of the bending roller 51, and winding the first separator sheet 2 around the bending roller 51 (refer to FIG. 7). When the first separator sheet 2 is wound around the bending roller 51, the movement of the pair of first clamps 31 is stopped. In this case, the negative electrode sheet 3 is positioned upstream from the bending roller 51 on the transfer path R1.

The scraper insertion step S35b is a step of moving the scraper 52 to the right side and inserting it into the bent portion R1a of the transfer path R1 after the first outer end 2e of the first separator sheet 2 passes through the bent portion R1a of the transfer path R1 and before the outer end 3e of the negative electrode sheet 3 reaches the bent portion R1a of the transfer path R1 (refer to FIG. 8).

The clamp re-moving step S35c is a step of moving the pair of first clamps 31 downward. Therefore, the negative electrode sheet 3 is moved to a position of the tip part 52R of the scraper 52. As the first separator sheet 2 is sent downstream on the transfer path R1, the negative electrode sheet 3 is sequentially peeled off from the first separator sheet 2 by the scraper 52. The same applies after the device that transfers the first separator sheet 2 is changed to the first transfer unit 40. In the clamp re-moving step S35c, the tip part 52R of the scraper 52 is inserted between the first separator sheet 2 and the turned-up negative electrode sheet 3.

The first separator interposing step S36 is a step of interposing the first separator sheet 2 between the first nip rollers 41. The pair of first clamps 31 pass between the pair of first nip rollers 41, and are moved below the pair of first nip rollers 41. Therefore, the first separator sheet 2 is introduced between the pair of first nip rollers 41. When the first separator sheet 2 is introduced between the pair of first nip rollers 41, the driven roller 41R is moved to the left side, and the first separator sheet 2 is interposed between the driving roller 41L and the driven roller 41R. When the first separator sheet 2 is interposed, the gripping of the first clamp 31 is released.

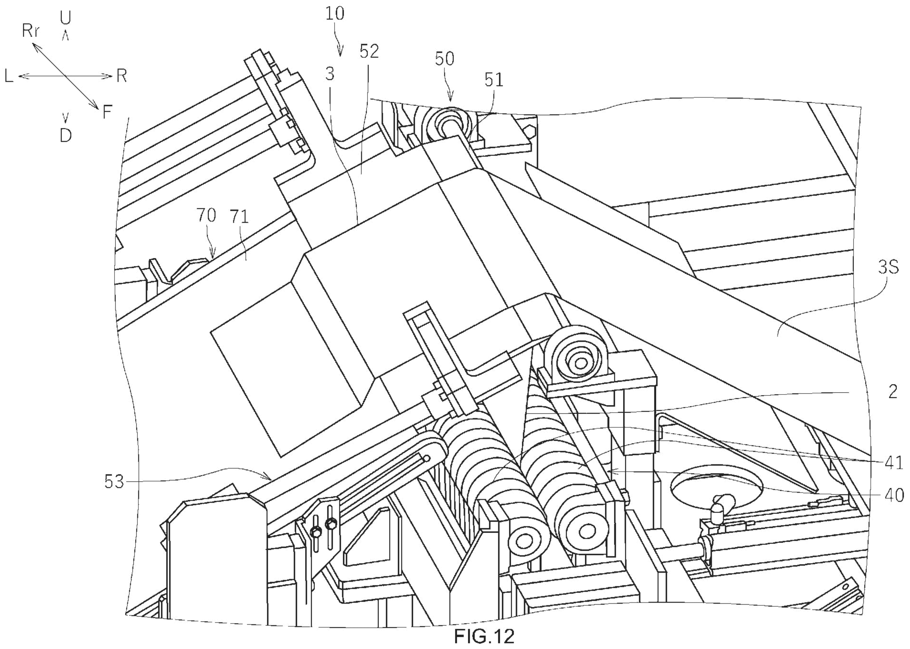

The first separator transfer step S37 is a step of rotating the driving roller 41L and transferring and drawing out the first separator sheet 2. FIG. 12 is a perspective view of the first transfer unit 40 and the first separation device 50 while transferring the first separator sheet 2. As shown in FIG. 12, when the first separator sheet 2 is transferred by the first transfer unit 40, the first separator sheet 2 and the negative electrode sheet 3 are unwound from the electrode body 1, and the first separator sheet 2 and the negative electrode sheet 3 are separated and collected.

Here, although not shown in FIG. 11, during the movement of the pair of first clamps 31, the orientation of the pair of first clamps 31 is changed appropriately by the rotation device 32a1. Specifically, in the gripping step S23, the pair of first clamps 31 are oriented such that their tip parts face the right side (refer to FIG. 3). As described above, in the pulling step S31, the first clamps 31 are rotated such that their tip parts face diagonally downward to the right. In the negative electrode separation step S35, the pair of first clamps 31 are rotated counterclockwise in a front view and oriented such that their tip parts face upward (refer to FIG. 7). Therefore, the first separator sheet 2 can be smoothly pulled and transferred to the first transfer unit 40. However, the orientation of the pair of first clamps 31 is not limited to the above orientation. Unless a particular problem occurs, the pair of first clamps 31 may be simply supported by the support unit 32a in a swingable manner or may be fixed to the support unit 32a in a non-swingable manner.

### Collection of Second Separator Sheet and Positive Electrode Sheet

In the present embodiment, while the first separator sheet 2 and the negative electrode sheet 3 are separated and collected, the second separator sheet 4 and the positive electrode sheet 5 are separated and collected.

The positive electrode separation step S135 is a step of winding the positive electrode laminate sheet 5S around the peeling roller 153, bending the transfer path R2 of the second separator sheet 4, and separating the second separator sheet 4 and the positive electrode sheet 5. The positive electrode separation step S135 includes a clamp moving step S135a, a roller lowering step S135b, and a clamp re-moving step S135c.

The clamp moving step S135a is a step of moving the pair of second clamps 131. In the clamp moving step S135a, first, the pair of second clamps 131 are moved to the right side of the downstream roller 152 (downstream of the transfer path R2), and the second separator sheet 4 is introduced above the upstream roller 151 and the downstream roller 152 and below the peeling roller 153 (refer to FIG. 9). Then, the pair of second clamps 131 are moved back to the left side (upstream side of the transfer path R2) by a predetermined distance. Therefore, the positive electrode laminate sheet 5S becomes loose and rests on the upstream roller 151 and the downstream roller 152 without tension.

The roller lowering step S135b is a step of lowering the peeling roller 153 below the upstream roller 151 and the downstream roller 152. Therefore, the positive electrode laminate sheet 5S is wound around the peeling roller 153. As a result, as shown in FIG. 10, the transfer path R2 of the second separator sheet 4 is bent into a V- shape by the peeling roller 153. The positive electrode sheet 5 is separated from the second separator sheet 4 by bending of the transfer path R2.

The clamp re-moving step S135c is a step of moving the pair of second clamps 131 to the right side again. As the pair of second clamps 131 move, the positive electrode sheet 5 is sequentially peeled off at a bent portion R2a of the transfer path R2. The same applies after the device that transfers the second separator sheet 4 is changed to the second transfer unit 140.

The second separator interposing step S136 is a step of interposing the second separator sheet 4 between the second nip rollers 141. The pair of second clamps 131 pass between the pair of second nip rollers 141 and are moved below the pair of second nip rollers 141. Therefore, the second separator sheet 4 is introduced between the pair of second nip rollers 141. When the second separator sheet 4 is introduced between the pair of second nip rollers 141, the driven roller 141R is moved to the left side, and the second separator sheet 4 is interposed between the driving roller 141L and the driven roller 141R. When the second separator sheet 4 is interposed, the gripping of the second clamp 131 is released.

The second separator transfer step S137 is a step of rotating the driving roller 141L and transferring and drawing out the second separator sheet 4. FIG. 13 is a front view of the second transfer unit 140 and the second separation device 150 while transferring the second separator sheet 4. When the second separator sheet 4 is transferred by the second transfer unit 140, the second separator sheet 4 and the positive electrode sheet 5 are unwound from the electrode body 1, and the second separator sheet 4 and the positive electrode sheet 5 are separated and collected.

Although not shown in FIG. 11, similarly to the movement of the pair of first clamps 31, during the movement of the pair of second clamps 131, the orientation of the pair of second clamps 131 is changed appropriately by the rotation device 132a1. Specifically, in the gripping step S23, the pair of second clamps 131 are oriented such that their tip parts face leftward (refer to FIG. 3). As described above, in the pulling step S31, the pair of second clamps 131 are rotated such that their tip parts face diagonally downward to the left. In the positive electrode separation step S135, the pair of second clamps 131 are rotated 90 degrees counterclockwise in a front view and oriented such that their tip parts face downward (refer to FIG. 9). In the positive electrode separation step S135, the pair of second clamps 131 are rotated 180 degrees clockwise in a front view and oriented such that their tip parts face upward.

As described above, in the above embodiment, the first separator sheet 2 is introduced into the first nip roller 41, and the second separator sheet 4 is introduced into the second nip roller 141. When the first separator sheet 2 and the second separator sheet 4 are drawn out, the prepared electrode body 1 can be separated into at least the first separator sheet 2, the negative electrode sheet 3, the second separator sheet 4, and the positive electrode sheet 5 and collected. Therefore, for example, compared to when the electrode body 1 is subjected to shredding, separating and the like to collect electrode materials, it is possible to improve the collection rate of the electrode materials.

In the above embodiment, the first outer end 2e and the second outer end 4e of the electrode body 1 accommodated in the holding part 21a of the holding jig 21 prepared in the holding jig preparation step S11 are gripped. Therefore, the first outer end 2e and the second outer end 4e can be gripped in a state where the electrode body 1 is positioned. Since a predetermined location of the electrode body 1 can be gripped, the electrode body 1 can be more suitably unwound.

In the above embodiment, the first gripping unit 30 grips an intermediate part of the first outer end 2e placed on the first placement part 21b, and the second gripping unit 130 grips an intermediate part of the second outer end 4e placed on the second placement part 21c. Since the intermediate part of the first outer end 2e and the second outer end 4e is gripped in a state where the both ends of the first outer end 2e and the second outer end 4e in the width direction are supported, the first outer end 2e and the second outer end 4e can be more suitably gripped. Therefore, the electrode body 1 can be more suitably unwound.

In the above embodiment, in the jig lowering step S33, the holding jig 21 is lowered by the jig lowering device 23. In this case, the electrode body 1 gripped by the first gripping unit 30 and the second gripping unit 130 is removed from the holding part 21a. Accordingly, when the first separator sheet 2 and the second separator sheet 4 are pulled, the rotation of the electrode body 1 is not inhibited by the holding jig 21, and the electrode body 1 can rotate freely. Therefore, the electrode body 1 can be more suitably unwound.

In the above embodiment, when the first outer end 2e and the second outer end 4e are drawn out, and the outer end 3e of the negative electrode sheet 3 is drawn out from the electrode body 1, the center scraper 81 is disposed between the first outer end 2e and the second outer end 4e (the scraper lowering step S24). When the center scraper 81 is disposed, even if the outer end 3e of the negative electrode sheet 3 is moved to the right side due to the stiffness of the negative electrode sheet 3, the outer end 3e of the negative electrode sheet 3 comes into contact with the center scraper 81, and thus the outer end 3e of the negative electrode sheet 3 is prevented from being positioned in the same direction (the right side in this case) as the second outer end 4e. Accordingly, when the first gripping unit 30 is moved, the negative electrode sheet 3 can be moved to the left side more reliably.

In the above embodiment, after starting an operation of drawing out the first outer end 2e and the second outer end 4e in the pulling step S31, in the center scraper raising step S32, the center scraper 81 is moved to a position where it does not come into contact with the electrode body 1. Accordingly, when the electrode body 1 is unwound, the electrode body 1 is prevented from coming into contact with the center scraper 81. Therefore, the electrode body 1 can be more suitably unwound.

### Other Embodiments

One embodiment of the electrode body disassembly device and the electrode body disassembly method proposed here has been described above. However, the above embodiment is merely an example, and the present invention can be implemented in other modes.

In the above embodiment, the center scraper 81 is moved in the up and down direction by the scraper lifting device 82, but the movement direction of the center scraper 81 is not limited thereto. The center scraper 81 may also be moved, for example, in the left to right direction or the front to rear direction.

In the above embodiment, in the pulling step S31, when the first separator sheet 2 and the second separator sheet 4 are pulled, the outer end 3e of the negative electrode sheet 3 is exposed between the first separator sheet 2 and the second separator sheet 4, but the present invention is not limited thereto. Depending on the length of the negative electrode sheet 3 in the longitudinal direction, at the time of the outer end processing step S21, the outer end 3e of the negative electrode sheet 3 may be exposed between the first separator sheet 2 and the second separator sheet 4. In such a case, the scraper lowering step S24 may be performed before the outer end processing step S21.

In the above embodiment, in the jig lowering step S33, when the holding jig 21 is lowered, the electrode body 1 is moved to the outside of the holding part 21a, but the present invention is not limited thereto. In order to move the electrode body 1 to the outside of the holding part 21a, only the electrode body 1 may be moved, or the electrode body 1 and the holding part 21a (the holding jig 21) may be moved.

In the above embodiment, the transfer path R1 of the first separator sheet 2 and the transfer path R2 of the second separator sheet 4 branch to the left and right from the electrode body accommodation part 20, but the transfer path R1 of the first separator sheet 2 and the transfer path R2 of the second separator sheet 4 are not particularly limited. The transfer path R1 of the first separator sheet 2 and the transfer path R2 of the second separator sheet 4 branch in opposite directions immediately after the branching, but for example, the negative electrode sheet 3 and the positive electrode sheet 5 may be bent downstream of the branch so that they are collected on the same side.

The configurations of the first movement device 32 and the second movement device 132 are not particularly limited. For example, the first movement device 32 and the second movement device 132 may move the first clamp 31 and the second clamp 131 along a guide rail laid on a predetermined track. The first movement device 32 and the second movement device 132 may include, for example, a multi-axis robot.

In addition, the above embodiments do not limit the present invention unless otherwise specified. In addition, the technology disclosed here can be variously modified. The components and processing operations described here may be appropriately omitted or combined unless a particular problem occurs. This specification includes the disclosures described in the following items.

### Item 1:

An electrode body disassembly method, including:
a step of preparing an electrode body in which a strip-shaped negative electrode and a strip-shaped positive electrode are laminated with a strip-shaped first separator and a strip-shaped second separator therebetween and wound in a predetermined winding direction; and
a separation step of pulling the first separator and the second separator and drawing out and separating the first separator, the negative electrode, the second separator and the positive electrode.

### Item 2:

The electrode body disassembly method according to Item 1, further including:
a step of preparing a jig having a case capable of accommodating the electrode body;
a step of accommodating the electrode body in the case;
a step of gripping a first outer end, which is a winding outer end of the first separator; and
a step of gripping a second outer end, which is a winding outer end of the second separator.

### Item 3:

The electrode body disassembly method according to Item 2,
wherein the jig prepared in the step of preparing a jig includes
a first placement part on which both ends of the first outer end in a width direction thereof are placed, and
a second placement part on which both ends of the second outer end in the width direction thereof are placed,
in the step of gripping the first outer end, an intermediate part of the first outer end in the width direction placed on the first placement part is gripped, and
in the step of gripping the second outer end, an intermediate part of the second outer end in the width direction placed on the second placement part is gripped.

### Item 4:

The electrode body disassembly method according to Item 2 or 3, further including a step of gripping the first outer end and the second outer end and moving the electrode body accommodated in the case to outside of the case.

### Item 5:

The electrode body disassembly method according to any one of Items 2 to 4, wherein a guide for guiding a negative electrode outer end is disposed between the first outer end and the second outer end such that, when the first outer end and the second outer end are pulled and the negative electrode outer end, which is a winding outer end of the negative electrode, is exposed between the first separator and the second separator, the negative electrode outer end is drawn out to one predetermined side of either the first separator or the second separator.

### Item 6:

The electrode body disassembly method according to Item 5, further including a step of moving the guide to a position where the guide does not come into contact with the electrode body after starting an operation of drawing out the first outer end and the second outer end in the separation step.

### Item 7:

An electrode body disassembly device separating an electrode body in which a strip-shaped positive electrode and a strip-shaped negative electrode are laminated with a strip-shaped first separator and a strip-shaped second separator therebetween and wound in a predetermined winding direction, the device comprising:
a first gripping unit that grips a first outer end, which is a winding outer end of the first separator;
a first nip roller that nips and draws out the first separator;
a first movement device that moves the first gripping unit such that the first separator is introduced into the first nip roller;
a second gripping unit that grips a second outer end, which is a winding outer end of the second separator;
a second nip roller that nips and draws out the second separator;
a second movement device that moves the second gripping unit such that the second separator is introduced into the second nip roller; and
a control device,
wherein the control device is configured to execute
processing of causing the first gripping unit to grip the first outer end,
processing of causing the second gripping unit to grip the second outer end, and
processing of causing the first movement device to move the first gripping unit so that the first separator is introduced into the first nip roller, and causing the second movement device to move the second gripping unit so that the second separator is introduced into the second nip roller, and the first separator and the second separator are drawn out.

### Item 8:

The electrode body disassembly device according to Item 7, comprising a jig having an open side and a case capable of accommodating the electrode body,
wherein, in the processing of gripping the first separator, the first outer end of the electrode body accommodated in the case is gripped, and
in the processing of gripping the second separator, the second outer end of the electrode body accommodated in the case is gripped.

### Item 9:

The electrode body disassembly device according to Item 8,
wherein the jig includes
a first placement part which extends from a peripheral part of the opening toward outside of the case at positions of both ends of the electrode body in a width direction thereof accommodated in the case and on which the first outer end is placed, and
a second placement part which extends from an opposite side of the first placement part to the opening within the peripheral part of the opening toward outside of the case, and on which the second outer end is placed,
in the processing of gripping the first separator, an intermediate part of the first outer end in the width direction placed on the first placement part is gripped, and
in the processing of gripping the second separator, an intermediate part of the second outer end in the width direction placed on the second placement part is gripped.

### Item 10:

The electrode body disassembly device according to Item 8 or 9, comprising a jig movement device that moves the jig between an accommodation position where the electrode body is accommodated in the case and a separation position where the case is separated from the electrode body,
wherein the control device controls the jig movement device to move the jig from the accommodation position to the separation position after the first outer end and the second outer end are gripped.

### Item 11:

The electrode body disassembly device according to any one of Items 8 to 10, further comprising a guide for guiding the negative electrode,
wherein, when the first outer end and the second outer end are pulled and a negative electrode outer end, which is a winding outer end of the negative electrode, is exposed between the first separator and the second separator, the guide is disposed between the first separator and the second separator, and is configured to guide the negative electrode outer end to one predetermined side of either the first separator or the second separator.

### Item 12:

The electrode body disassembly device according to Item 11, wherein the control device is configured to further execute processing of, when the negative electrode outer end is exposed between the first separator and the second separator, disposing the guide at a predetermined position between the first separator and the second separator, and then moving the guide from the position.

## Claims

1. An electrode body disassembly method, including:
a step (S10) of preparing an electrode body (1) in which a strip-shaped negative electrode (3) and a strip-shaped positive electrode (5) are laminated with a strip-shaped first separator (2) and a strip-shaped second separator (4) therebetween and wound in a predetermined winding direction; and
a separation step (S30) of pulling the first separator (2) and the second separator (4) and drawing out and separating the first separator (2), the negative electrode (3), the second separator (4) and the positive electrode (5).

2. The electrode body disassembly method according to claim 1, further including:
a step (S11) of preparing a jig (21) having a case (21a) capable of accommodating the electrode body (1);
a step (S22) of accommodating the electrode body (1) in the case (21a);
a step (S23) of gripping a first outer end (2e), which is a winding outer end of the first separator (2); and
a step (S23) of gripping a second outer end (4e), which is a winding outer end of the second separator (4).

3. The electrode body disassembly method according to claim 2,
wherein the jig (21) prepared in the step (S11) of preparing a jig (21) includes
a first placement part (21b) on which both ends of the first outer end (2e) in a width direction thereof are placed, and
a second placement part (21c) on which both ends of the second outer end (4e) in the width direction thereof are placed,
in the step (S23) of gripping the first outer end (2e), an intermediate part of the first outer end (2e) in the width direction placed on the first placement part (21b) is gripped, and
in the step (S23) of gripping the second outer end (4e), an intermediate part of the second outer end (4e) in the width direction placed on the second placement part (21c) is gripped.

4. The electrode body disassembly method according to claim 2 or 3, further including a step (S33) of gripping the first outer end (2e) and the second outer end (4e) and moving the electrode body (1) accommodated in the case (21a) to outside of the case (21a).

5. The electrode body disassembly method according to any one of claims 2 to 4, wherein a guide (81) for guiding a negative electrode outer end (3e) is disposed between the first outer end (2e) and the second outer end (4e) such that, when the first outer end (2e) and the second outer end (4e) are pulled and the negative electrode outer end (3e), which is a winding outer end of the negative electrode (3), is exposed between the first separator (2) and the second separator (4), the negative electrode outer end (3e) is drawn out to one predetermined side (L) of either the first separator (2) or the second separator (4).

6. The electrode body disassembly method according to claim 5, further including a step (S32) of moving the guide to a position where the guide (81) does not come into contact with the electrode body (1) after starting an operation of drawing out the first outer end (2e) and the second outer end (4e) in the separation step.

7. An electrode body disassembly device (10) separating an electrode body (1) in which a strip-shaped positive electrode (5) and a strip-shaped negative electrode (3) are laminated with a strip-shaped first separator (2) and a strip-shaped second separator (4) therebetween and wound in a predetermined winding direction, the device comprising:
a first gripping unit (30) that grips a first outer end (2e), which is a winding outer end of the first separator (2);
a first nip roller (41) that nips and draws out the first separator (2);
a first movement device (32) that moves the first gripping unit (30) such that the first separator (2) is introduced into the first nip roller (41);
a second gripping unit (130) that grips a second outer end (4e), which is a winding outer end of the second separator (4);
a second nip roller (141) that nips and draws out the second separator (4);
a second movement device (132) that moves the second gripping unit (130) such that the second separator (4) is introduced into the second nip roller (141); and
a control device (100),
wherein the control device (100) is configured to execute
processing (S23) of causing the first gripping unit (30) to grip the first outer end (2e),
processing (S23) of causing the second gripping unit (130) to grip the second outer end (4e), and
processing (S30) of causing the first movement device (32) to move the first gripping unit (30) so that the first separator (2) is introduced into the first nip roller (41), and causing the second movement device (132) to move the second gripping unit (130) so that the second separator (4) is introduced into the second nip roller (141), and the first separator (2) and the second separator (4) are drawn out.

8. The electrode body disassembly device (10) according to claim 7, comprising a jig (21) having an open side and a case (21a) capable of accommodating the electrode body (1),
wherein, in the processing (S23) of gripping the first separator (2), the first outer end (2e) of the electrode body (1) accommodated in the case (21a) is gripped, and
in the processing (S23) of gripping the second separator (4), the second outer end (4e) of the electrode body (1) accommodated in the case (21a) is gripped.

9. The electrode body disassembly device (10) according to claim 8,
wherein the jig (21) includes
a first placement part (21b) which extends from a peripheral part (21aa) of the opening toward outside of the case (21a) at positions of both ends of the electrode body (1) in a width direction thereof accommodated in the case (21a) and on which the first outer end (2e) is placed, and
a second placement part (21c) which extends from an opposite side of the first placement part (21b) to the opening within the peripheral part (21aa) of the opening toward outside of the case (21a), and on which the second outer end (4e) is placed,
in the processing (S23) of gripping the first separator (2), an intermediate part of the first outer end (2e) in the width direction placed on the first placement part (21b) is gripped, and
in the processing (S23) of gripping the second separator (4), an intermediate part of the second outer end (4e) in the width direction placed on the second placement part (21c) is gripped.

10. The electrode body disassembly device (10) according to claim 8 or 9, comprising a jig movement device (23) that moves the jig (21) between an accommodation position (P1) where the electrode body (1) is accommodated in the case (21a) and a separation position (P2) where the case (21a) is separated from the electrode body (1),
wherein the control device (100) controls the jig movement device (23) to move the jig (21) from the accommodation position (P1) to the separation position (P2) after the first outer end (2e) and the second outer end (4e) are gripped.

11. The electrode body disassembly device (10) according to any one of claims 8 to 10, further comprising a guide (81) for guiding the negative electrode (3),
wherein, when the first outer end (2e) and the second outer end (4e) are pulled and a negative electrode outer end (3e), which is a winding outer end of the negative electrode (3), is exposed between the first separator (2) and the second separator (4), the guide (81) is disposed between the first separator (2) and the second separator (4), and is configured to guide (81) the negative electrode outer end (3e) to one predetermined side (L) of either the first separator (2) or the second separator (4).

12. The electrode body disassembly device (10) according to claim 11, wherein the control device (100) is configured to further execute processing (S32) of, when the negative electrode outer end (3e) is exposed between the first separator (2) and the second separator (4), disposing the guide (81) at a predetermined position between the first separator (2) and the second separator (4), and then moving the guide (81) from the position.
